# EUROPEAN PATENT SPECIFICATION

(11) **EP 0 289 829 B1**
(45) Date of publication and mention of the grant of the patent: **23.06.1993**
(21) Application number: 88106000.8
(22) Date of filing: 15.04.1988
(51) Int. Cl.: G21C 19/30, G21C 3/32

(54) **Nuclear fuel assembly with a debris-filter bottom nozzle**
Brennelement mit Trümmerfänger-Fussstück
Assemblage combustible avec embout inférieur formant un piège de débris

(30) Priority: 05.05.1987 US 46219
(43) Date of publication of application: 09.11.1988
(73) Proprietor: WESTINGHOUSE ELECTRIC CORPORATION, Pittsburgh Pennsylvania 15222 (US)
(72) Inventor: Shallenberger, John Milton, Pittsburgh Pennsylvania 15238 (US); Ferlan, Stephen Joseph, Pittsburgh Pennsylvania 15221 (US)
(74) Representative: Gallo, Wolfgang, Dipl.-Ing. (FH)

(56) References cited:
- EP-A- 0 196 611
- EP-A- 0 311 037

## Description

The present invention relates generally to nuclear reactors and, more particularly, to a debris filter bottom nozzle in a nuclear fuel assembly.

During manufacture and subsequent installation and repair of components comprising a nuclear reactor coolant circulation system, a diligent effort is made to help assure the removal of all debris from the reactor vessel and its associated systems which circulate coolant therethrough under various operating conditions. Although elaborate procedures are carried out to help assure debris removal, experience shows that in spite of the safeguards used to effect such removal, some chips and metal particles still remain hidden in the systems. Most of the debris consists of metal turnings which were probably left in the primary system after steam generator repair or replacement.

Fuel assembly damage due to debris trapped at the lowermost grid has been noted in several reactors in recent years. Debris enters through the fuel assembly bottom nozzle flow holes from the coolant flow openings in the lower core support plate when the plant is started up. The debris tends to become lodged in the lowermost support grid of the fuel assembly within the spaces between the "egg-crate" shaped cell walls of the grid and the lower end portions of the fuel rod tubes. The damage consists in fuel rod tube perforations caused by fretting of debris in contact with the exterior of the tube. Debris may also become entangled in the nozzle plate holes and the flowing coolant causes the debris to gyrate which tends to cut through the cladding of the fuel rods.

Several different approaches have been proposed and tried for carrying out the removal of debris from nuclear reactors, such as described in U.S. Patent 4,096,032, and in E.P. Publications No. 0184219, No. 0196611 and No. 0213813.

The present invention provides a fuel assembly having a debris-filter bottom nozzle which includes a nozzle plate having smaller but more flow holes than used heretofore and which flow holes are smaller than any of the unoccupied or free spaces through the lowermost grid. The flow holes, each preferably less than about 5 mm in diameter, are sized to filter out debris of damage-inducing size which otherwise would collect primarily in the sections between the bottom nozzle and the lowermost grid, and in the unoccupied spaces of the lowermost grid, and there could cause fuel rod fretting failures. Unexpectedly, this concept of providing smaller and more flow holes reduces the pressure drop through the debris filter bottom nozzle, as compared to conventional bottom nozzles with debris filters, even though the total flow area through the bottom nozzle embodying the invention may be less than the total flow area through the conventional bottom nozzles. This has been found to be due to the fact that the pattern of smaller but more flow holes in the debris-filter bottom nozzle according to the invention provides a significantly larger flow area directly above the coolant inlet flow holes in the lower core plate of the reactor than do the patterns of larger but fewer flow holes in conventional bottom nozzles.

The present invention provides a fuel assembly having a debris-filter bottom nozzle disposed adjacent to and below the grid and below the lower ends of the fuel rods, and which debris-filter bottom nozzle comprises: (a) support means adapted to rest on a lower core plate of a nuclear reactor; and (b) a nozzle plate fixed on the support means facing toward the lowermost grid and having defined therethrough only a plurality of flow apertures each of which is smaller in diameter than the maximum cross-sectional dimension of any unoccupied space through the lowermost grid through which liquid coolant can flow, the arrangement being such that any debris carried by the liquid coolant and small enough to pass through the flow apertures will also pass through the unoccupied grid spaces, whereas any debris carried by the liquid coolant and so large as not to pass through the unoccupied grid spaces will not pass through the flow apertures.

More particularly, the flow apertures are in the form of circular flow holes and uniform in cross-sectional size. Preferably, the flow holes are less than 5 mm in diameter and are packed in a density of about 16 per square inch (2.5 per cm²). Preferably, the holes are 4.8 mm +/-0.2 mm in diameter. The ligaments or sections of the nozzle plate extending between the flow holes have a maximum dimension of 2.5 mm. Further, the flow holes each have a long taper inlet chamfer of about 3.5 mm in length and forming an angle of about 12 to 15 degrees with respect to a central axis of said hole. Furthermore, the majority of flow holes are formed through the nozzle plate at locations directly above the inlet flow openings of the lower core plate.

A preferred embodiment of the invention will now be described, by way of example only with reference to the accompanying drawings, in which:
Figure 1 is an elevational view, partly in section, of a fuel assembly incorporating a debris-filter bottom nozzle according to the invention, the fuel assembly being shown in vertically foreshortened form and with parts broken away for clarity;
Figure 2 is a top plan view of a conventional bottom nozzle showing the pattern of relatively large flow holes in its plate;
Figure 3 is a similar top plan view of the debris-filter bottom nozzle embodying the invention, showing the pattern of relatively small flow holes in its plate;
Figure 4 is an enlarged fragmentary portion of the plate of the debris-filter bottom nozzle shown in Figure 3;
Figure 5 is an enlarged bottom plan view of a fragmentary portion of the lowermost grid of the fuel assembly shown in Figure 1;
Figure 6 is an enlarged top plan view of the upper left hand corner of the debris-filter bottom nozzle of Figure 3;
Figure 7 is an enlarged cross-sectional view of one of the flow holes in the debris-filter bottom nozzle as taken along line 7-7 of Figure 6;
Figure 8 is an enlarged cross-sectional view of the instrumentation tube hole in the debris-filter bottom nozzle, as taken along line 8-8 of Figure 6;
Figure 9 is an enlarged cross-sectional view of one of the guide thimble holes in the debris-filter bottom nozzle as taken along line 9-9 of Figure 6; and
Figure 10 is an enlarged fragmentary axial cross-sectional view of a lower end portion of one of the fuel rods in the fuel assembly of Figure 1.

In the following description, like reference characters designate like or corresponding parts throughout the various views of the drawings, and terms such as "forward", "rearward", "left", "right", "upwardly", "downwardly", and the like are employed as words of convenience not to be construed as limiting terms.

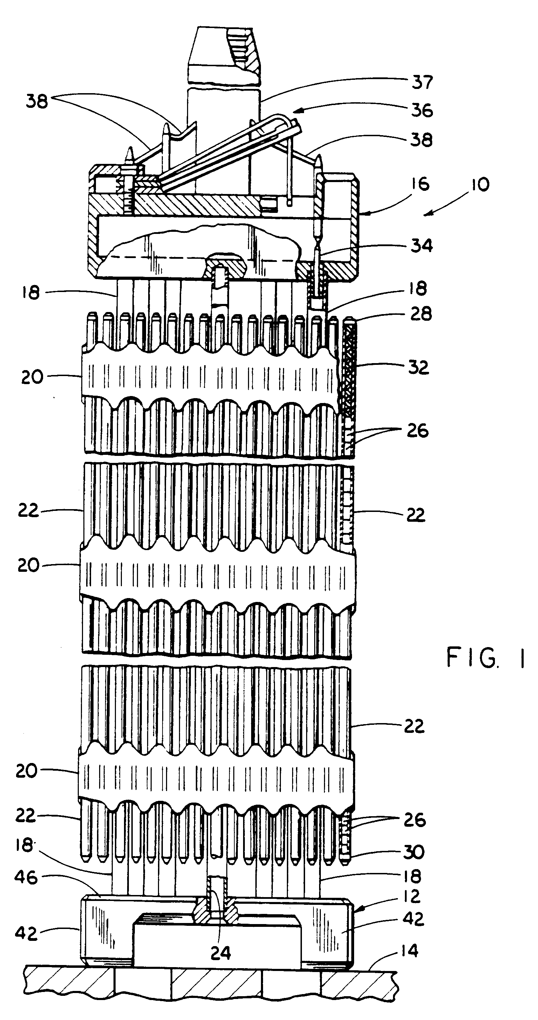

Referring now to the drawings, and particularly to Figure 1, the fuel assembly shown therein and generally designated with numeral 10 is of the type used in pressurized water reactors, and it has a structural skeleton which, at its lower end, includes a debris-filter bottom nozzle 12 embodying the invention to be described in detail later herein. The bottom nozzle 12 supports the fuel assembly 10 on a lower core support plate 14 in the core region of a nuclear reactor (not shown). In addition to the bottom nozzle 12, the structural skeleton of the fuel assembly 10 includes a top nozzle 16, guide tubes or thimbles 18 which extend longitudinally between and are rigidly attached to the bottom and top nozzles 12, 16 and transverse grids 20 spaced apart axially along the guide thimbles 18 and attached thereto. The fuel assembly 10 includes further an organized array of elongate fuel rods 22 spaced transversely apart and supported by the grids 20, and an instrumentation tube 24 which is located in the center of the fuel assembly and extends between, and is connected to, the bottom and top nozzles 12, 16. With this arrangement of parts, the fuel assembly 10 forms an integral unit capable of being conveniently handled without damage to the assembly parts.

Each of the fuel rod 22 held in parallel spaced relationship with respect to one another by the grids 20 contains nuclear fuel pellets 26 and is closed at its opposite ends by means of end plugs 28, 30, the pellets 26 being maintained in a stack by means of a plenum spring 32 disposed between the upper end plug 28 and the stack of pellets. A liquid moderator/coolant, such as water or water containing boron, is pumped upwardly through flow openings in the lower core plate 14, through the bottom nozzle 12 of the fuel assembly 10, and through the guide thimbles 18 and the spaces between the fuel rods 22 in order to extract heat generated in the fuel assembly for use thereof in producing useful work.

Control rods 34 are reciprocally movable in the guide thimbles 18 and supported from a rod-cluster control mechanism 36 positioned above the top nozzle 16 and including a spider assembly comprising an internally threaded cylindrical member 37 and a plurality of radially extending flukes or arms 38, each of which has at least one control rod 34 connected thereto. The control mechanism 36 is operable to move the control rods vertically in the guide thimbles 18, thereby to control the fission process in the fuel assembly 10, all in a well known manner.

### Debris Trap Bottom Nozzle

As mentioned above, fuel assembly damage due to debris trapped at or below the lowermost one of the grids 20 has been found to be a problem. Therefore, in order to avoid such damage, it is highly desirable to prevent debris from passing through the bottom nozzle flow holes.

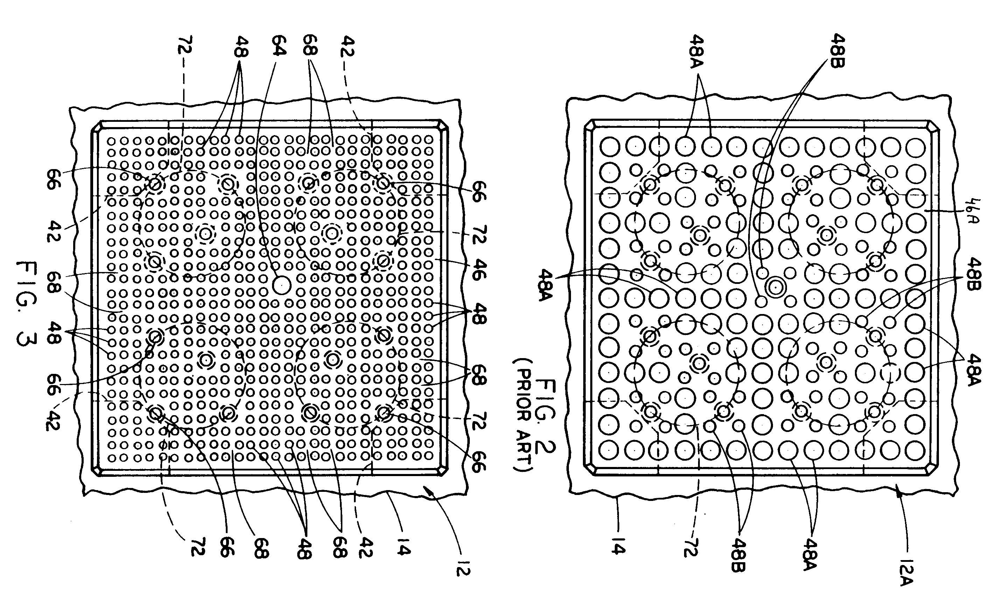

To this end, the bottom nozzle 12, in addition to supporting the fuel assembly 10 on the lower core support plate 14, contains features which function to filter out debris of potentially damaging size from the coolant flowing through the bottom nozzle. As conventional, the bottom nozzle 12 includes corner legs 42 for supporting the fuel assembly 10 on the lower core plate 14, and a generally rectangular planar plate 46 suitably attached, such as by welding, to the corner legs 42. As shown in Figure 2, the plate 46A of a conventional bottom nozzle 12A customarily is provided with relatively large flow holes 48A, 48B of two different diametric sizes, such as about 6mm and 12 mm, for example. Flow holes this large will pass coolant-entrained debris of potentially damaging size.

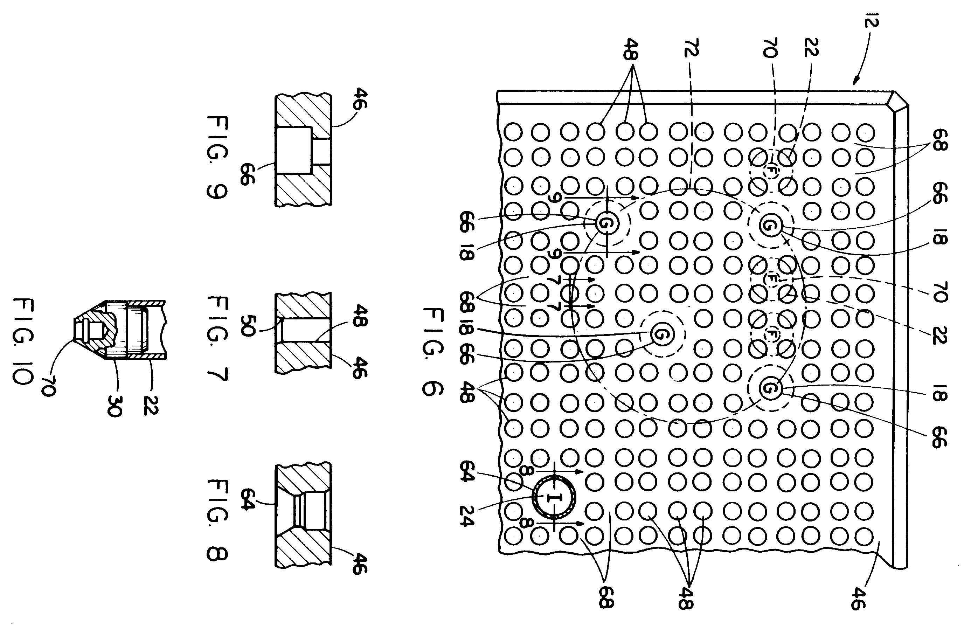

As seen from Figure 3, the nozzle plate 46 of the debris-filter bottom nozzle 12 embodying the invention has a much greater number of smaller holes 48 sized to "filter out" damaging-size debris without adversely affecting flow or pressure drop through the adapter plate 46 and across the fuel assembly 10. Thus, the debris-filter bottom nozzle 12 is similar to the prior-art bottom nozzle 12A, except for the number and size of the flow holes 48 in the plate 46 and the size of the inlet chamfer 50 (Figure 6) at each flow hole 48. Preferably, flow holes 48 are uniform in cross-sectional size and defined in a pattern which substantially covers every portion of the plate 46 across its length and breadth.

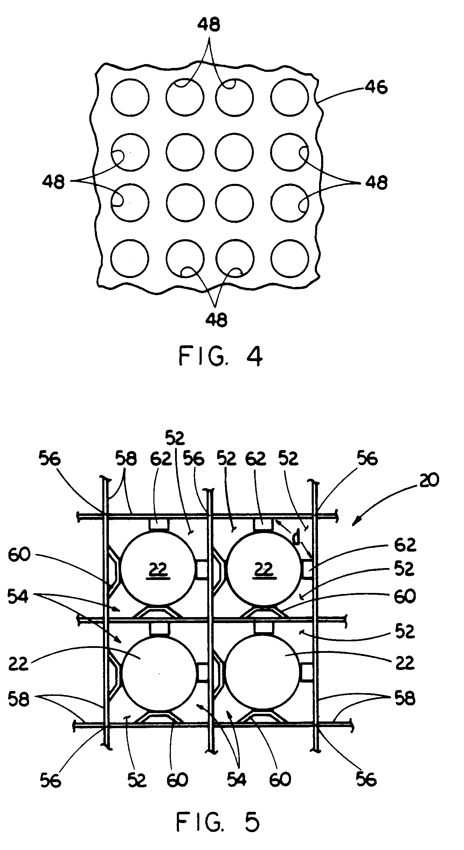

The diameter of the flow holes 48, shown enlarged in Figure 4, is such that debris of the size typically caught in the lowermost support grid 20 will not pass through the holes 48. On the other hand debris small enough to pass through the flow holes 48 will also pass through the grids 20 since the diameter of the flow holes 48 is smaller than the largest dimension "d" (Figure 5) of the unoccupied or free spaces 52 through any cell 54 of the support grid 20. Such spaces 52 are typically found in the corners 56 of each cell formed by interleaved straps 58 of the grid 20, each such space being bounded by the portions of the interleaved straps 58 between the respective pair of adjacent detents (dimples 60, springs 62) on the straps, and by the fuel rod 22 extending through the respective grid cell 54. The largest dimension "d" corresponds substantially to the straight distance between the adjacent detents, as indicated in Figure 5. By ensuring that only debris small enough to pass through these grid spaces 52 can pass through the flow holes 48 in the bottom nozzle plate 46, the potential for debris-induced fuel rod failures is significantly reduced.

Based upon a comprehensive analysis of fuel surveillance underwater television photographs of fuel assemblies from reactors experiencing debris-induced fuel rod failures, a nominal diameter for the flow holes 48 of about 4.8 mm was selected. A diameter of 4.8 mm +/- 0.2 mm is preferred, although the holes 48 could also be made somewhat smaller in diameter. All previously observed debris-induced fuel rod failures occurred at or below the lowermost grid and appeared to be caused by debris larger than 5 mm in width, whilst little or no significant damage was observed above the lowermost grid. This led to the conclusion that damaging-size debris was effectively stopped by the lowermost grid 20 whereas smaller debris typically present in reactor coolant systems is relatively delicate in nature and not likely to cause rod damage. The debris-filter bottom nozzle 12 with flow holes 48 about 4.8 mm in diameter formed in its plate 46 is expected to reduce by 90 percent the potentially rod-damaging debris carried into fuel assembly by the primary coolant flow. Such estimate may be conservative since it appears likely that debris substantially larger than 5 mm in width may do a disproportionate amount of fuel rod damage.

Referring now to Figures 6-10, it is seen that in addition to the large number of flow holes 48, the plate 46 includes one central instrumentation tube hole 64 and a number of guide thimble holes 66. As seen from Figure 7, a long taper inlet chamfer 50, about 3.5 mm in length and forming an angle of about 12 to 15 degrees with respect to the axis of the hole 48, is employed on each of the flow holes 48 to optimize the flow, i.e., to minimize the loss coefficient increase due to the higher frictional effect inherent in the use of smaller flow holes 48. The longer chamfers 50 will prevent the flow stream from reattaching itself within the adapter plate holes 48 and thereby increasing pressure drop across the fuel assembly 10.

One additional well-known function of the bottom nozzle plate 46 is to capture the fuel rods 22, that is, to prevent them from dropping through the bottom nozzle 12. At initial startup, the fuel rods 22 are held by the grids 20 above the bottom nozzle 12, as seen from Figure 1. However, after the reactor has operated for a time, the grids 20 usually loosen their grip on the fuel rods 22 and some of the rods drop down upon the bottom nozzle plate 46. As shown in Figure 6, the fuel rods 22 are aligned with the ligaments or sections 68 of the plate 46 between the flow holes 48 which are "packed" in a density of about 2.5 holes per cm². The sections 68 of the plate 46 extending between the flow holes 48 have a maximum dimension of 2.5 mm. If the fuel rods 22 having maximum diameters of about 1 cm were located over the flow holes 48, then, when falling down upon the plate 46, they would plug the holes and cause an increase in pressure drop. The lower end plugs 30 of the fuel rods 22 which rest on sections 68 of the plate 46 have a terminal end diameter of about 3.8 mm and a tapered axial cross-sectional shape, as seen from Figure 10, which does not block the holes 48. However, if the terminal end 70 of the lower end plug 30 were larger in diameter, the section 68 of the plate 46 between the flow holes 48 would have to be larger in size in order to prevent the plug ends from covering portions of the adjacent holes 48. This would undoubtedly translate into fewer flow holes and hence, in a higher pressure drop.

Flow testing of a fuel assembly incorporating the debris-filter bottom nozzle 12 embodying the invention unexpectedly revealed a unique quality of it. Initially, the bottom nozzle 12 was designed to have a total flow area through a pattern of 4.8 mm flow holes in the plate equivalent to the total flow area through the pattern of the much larger holes 48A and 48B (approximately 6 mm and 12 mm diameters, respectively) of the prior art bottom nozzle 12A of Figure 2. It was believed that, at a minimum, matching the total flow areas and optimizing the inlet chamfers 50 in the smaller holes 48 would be necessary in order to keep the pressure drop close to that of the prior art bottom nozzle and to provide comparable flow. In the final design, the total flow area of the bottom nozzle of the present invention was slightly less than the total flow area of the prior art bottom nozzle. In the flow testing, however, although the flow area of the debris filter bottom nozzle 12 was less than that of the prior art bottom nozzle 12A, it was found that, rather than obtaining the same or (as anticipated) a slightly higher pressure drop across the fuel assembly 10, the debris filter bottom nozzle 12 actually resulted in a 5% lower pressure drop than with the prior art bottom nozzle 12A.

An investigation into the cause of this unexpected lower pressure drop revealed that it was due to a 19% greater flow area in the debris filter bottom nozzle 12A in four local areas, each directly above the four inlet flow holes, identified by number 72 in Figures 2, 3 and 6, of the lower core plate 14 aligned with each fuel assembly. This discovery seems to show that increasing the flow area through the portions of the plate 46 directly above the core plate flow holes 72 is more beneficial in reducing pressure drop than is providing an equivalent total flow area uniformly through the entire plate.

Several potential benefits from use of the low pressure drop bottom nozzle 12 in fuel assembly design are expected to be realized. The number of flow holes in the bottom nozzle can possibly be reduced by concentrating a high density hole pattern directly over the inlet core plate holes 72, thereby optimizing the design for flow, reducing the manufacturing costs, and reducing the stress levels on the bottom nozzle. The lower pressure drop attained with this bottom nozzle design will also allow use of other features in fuel assemblies, such as intermediate flow mixer grids and baffle-jetting anti-vibration grids or clips, which typically are not used widely because they raise the pressure drop. Also, LOCA (loss-of-coolant-accident) and DNB (departure-from-nucleate-boiling) penalties caused by high pressure drop resulting in lower total pump heads can be reduced, as can loads on the reactor vessel head caused by high pressure drop across the fuel assemblies.

## Claims

1. A fuel assembly for a nuclear reactor, including a plurality of nuclear fuel rods, at least one grid supporting the fuel rods in an organized array and having therein unoccupied spaces allowing liquid coolant to flow therethrough, and a bottom nozzle disposed below said grid and below lower ends of said fuel rods, said bottom nozzle comprising support means (42) for supporting the fuel assembly on a lower core plate (14) of the nuclear reactor, and a transverse plate (46) having a plurality of flow apertures (48) formed therethrough, characterized in that said transverse plate (46) of said bottom nozzle (12) forms a debris filter, said flow apertures (48) being of uniform circular cross-sectional size and individually so much smaller in size than the maximum dimension of any of said unoccupied spaces (52) through said grid (20) as to permit passage therethrough only of coolant-entrained debris small enough to pass also through said unoccupied grid spaces (52), and to prevent passage therethrough of any coolant-entrained debris too large to pass freely through said unoccupied grid spaces (52).

2. A fuel assembly according to claim 1, characterized in that said flow apertures (48) have a diameter of not more than 5 mm.

3. A fuel assembly according to claim 2, characterized in that said flow apertures (48) have a diameter of 4.8 mm +/- 0.2 mm.

4. A fuel assembly according to any one of the preceding claims, characterized in that said flow apertures (48) are packed in a density of about 2.5/cm².

5. A fuel assembly according to claim 4, characterized in that said flow apertures (48) are separated from each other by sections (68) of said plate (46) which have a maximum width of 2.5 mm.

6. A fuel assembly according to any one of the preceding claims, characterized in that each of said flow apertures (48) has inlet chamfer (50).

7. A fuel assembly according to claim 6, characterized in that said inlet chamfer (50) has a length of substantially 3.5 mm.

8. A fuel assembly according to claim 6 or 7, characterized in that said inlet chamfer (50) forms an angle of substantially 12 to 15 degrees with respect to the longitudinally axis of the respective flow aperture (48).

## Patentansprüche

1. Brennelement für einen Kernreaktor, mit einer Vielzahl von Kernbrennstäben, mindestens einem Gitter, das die Brennstäbe in einer organisierten Anordnung abstützt und freie, ein Hindurchströmen flüssigen Kühlmittels ermöglichende Räume aufweist, und einem Fußstück, das unterhalb des Gitters und der unteren Enden der Brennstäbe angeordnet ist, wobei das Fußstück Stützmittel (42) zum Abstüzen des Brennelements auf einer unteren Kerntragplatte (14) des Kernreaktors und eine Querplatte (46) aufweist, die eine Vielzahl von darin gebildeten Strömungsöffnungen (48) aufweist, dadurch gekennzeichnet, daß die Querplatte (46) des Fußstücks (12) ein Teilchenfilter bildet, wobei die Strömungsöffnungen (48) gleichförmige Kreisquerschnittsgröße haben und jeweils eine so viel kleinere Größe als die maximale Abmessung irgendeines der freien Räume (52) in dem Gitter (20) haben, daß sie den Durchtritt nur ausreichend kleiner, im Kühlmittel mitgeführter Teilchen ermöglichen, so daß diese auch durch die freien Gitterräume (52) durchpassieren können, und den Durchtritt irgendwelcher im Kühlmittel mitgeführter Teilchen verhindern, die zu groß sind, um frei durch die freien Gitterräume (52) hindurchpassieren zu können.

2. Brennelement nach Anspruch 1, dadurch gekennzeichnet, daß die Strömungsöffnungen (48) einen Durchmesser von nicht mehr als 5 mm haben.

3. Brennelement nach Anspruch 2, dadurch gekennzeichnet, daß die Strömungsöffnungen (48) einen Durchmesser von 4,8 mm +/- 0,2 mm haben.

4. Brennelement nach einem der vorhergehenden Ansprüche, dadurch gekennzeichnet, daß die Strömungsöffnungen (48) mit einer Anordnungsdichte von etwa 2,5/cm² angeordnet sind.

5. Brennelement nach Anspruch 4, dadurch gekennzeichnet, daß die Strömungsöffnungen (48) durch Abschnitte (68) der Platte (46) voneinander getrennt sind, die eine maximale Breite von 2,5 mm haben.

6. Brennelement nach einem der vorhergehenden Ansprüche, dadurch gekennzeichnet, daß jede der Strömungsöffnungen (48) eine Einlaßabschrägung (50) aufweist.

7. Brennelement nach Anspruch 6, dadurch gekennzeichnet, daß die Einlaßabschrägung (50) eine Länge von etwa 3,5 mm hat.

8. Brennelement nach Anspruch 6 oder 7, dadurch gekennzeichnet, daß die Einlaßabschrägung (50) einen Winkel von etwa 12 bis 15 Grad mit Bezug auf die Längsachse der betreffenden Strömungsöffnung (48) bildet.

## Revendications

1. Assemblage de combustible pour un réacteur nucléaire, contenant une pluralité de barres de combustible nucléaire, au moins une grille qui soutient les barres de combustible selon un réseau organisé et qui comporte des espaces vides permettant au fluide caloporteur de s'y écouler, et un embout inférieur placé en dessous de ladite grille et en dessous des extrémités inférieures desdites barres de combustible, ledit embout inférieur comportant un moyen de support (42) qui soutient l'assemblage de combustible sur la plaque inférieure (14) du coeur du réacteur nucléaire et une plaque (46) transversale, traversée par une pluralité d'orifices (48) d'écoulement, caractérisé en ce que ladite plaque transversale (46) dudit embout inférieur (12) constitue un filtre à débris, lesdits orifices (48) d'écoulement ayant une taille, en coupe transversale, circulaire et uniforme et étant chacun de taille bien inférieure à la dimension maximale de n'importe quel espace vide (52) existant dans ladite grille (20) de façon à ne permettre le passage que dis seuls débris, entraînés par le fluide caloporteur, suffisamment petits pour traverser également les espaces vides (52) de la grille et de façon à empêcher le passage de tous débris, entraînés par le fluide caloporteur, trop gros pour traverser librement lesdits espaces vides (52) de la grille.

2. Assemblage de combustible selon la revendication 1, caractérisé en ce que lesdits orifices (48) d'écoulement ont un diamètre qui ne dépasse pas 5 mm.

3. Assemblage de combustible selon la revendication 2, caractérisé en ce que lesdits orifices (48) d'écoulement ont un diamètre de 4,8 mm +/- 0,2 mm.

4. Assemblage de combustible selon l'une quelconque des précédentes revendications, caractérisé en ce que lesdits orifices (48) d'écoulement sont formés avec une densité d'environ 2,5 par cm2.

5. Assemblage de combustible selon la revendication 4, caractérisé en ce que lesdits orifices (48) d'écoulement sont séparés les uns des autres par des parties (68) de ladite plaque (46) qui ont une largeur maximale de 2,5 mm.

6. Assemblage de combustible selon l'une quelconque des précédentes revendications, caractérisé en ce que chaque orifice (48) d'écoulement comporte un chanfrein d'entrée (50).

7. Assemblage de combustible selon la revendication 6, caractérisé en ce que la longueur dudit chanfrein d'entrée (50) vaut sensiblement 3,5 mm.

8. Assemblage de combustible selon la revendication 6 ou 7, caractérisé en ce que ledit chanfrein d'entrée (50) fait un angle de sensiblement 10 à 15 degrés par rapport à l'axe longitudinal de l'orifice (48) d'écoulement respectif.
